# EUROPEAN PATENT SPECIFICATION

(11) **EP 1 149 536 B1**
(45) Date of publication and mention of the grant of the patent: **03.09.2003**
(21) Application number: 00109233.7
(22) Date of filing: 28.04.2000
(51) Int. Cl.: A23G 1/18, A23G 1/20

(54) **Chocolate production by super-cooling and press-forming**
Verfahren zur Herstellung von Schokolade durch Superkühlung und Pressformen
Production du chocolat par sous-refroidissement et moulage par pression

(43) Date of publication of application: 31.10.2001
(73) Proprietor: Kraft Foods R & D, Inc. Zweigniederlassung München, 81737 München (DE)
(72) Inventor: Demmer, Thomas, Dr., 80799 München (DE); Wutz, Harald, 81929 München (DE); Ebbinghaus, Lars, 19273 Sollentua (SE); Kirtley, Nigel, 1640 Rhode-St-Genese (BE); Baxter, John F., 80802 München (DE)
(74) Representative: HOFFMANN - EITLE

(56) References cited:
- EP-A- 0 589 820
- EP-A- 0 776 608
- EP-A- 0 920 810
- EP-A- 0 925 720
- WO-A-98/30111
- CH-A- 649 444
- US-A- 4 865 856

## Description

The present invention relates to a novel process for the production of chocolate. The invention moreover pertains to the use of stamps for the press-forming of chocolate.

Chocolate is undoubtedly one of the most popular types of confectionary. This is reflected by the enormous amounts of chocolate consumed. In 1989 the consumed amount per person was as high as 6.9 kg on average, which sums up to several hundred thousand tons each year.

Given these huge amounts of chocolate, the industry is continuously trying to improve existing chocolate production processes or to invent new methods for manufacturing. The driving force behind such research and development activities is the need for quick and simple production processes which allow the production of high-quality chocolate.

It is well known in the art of chocolate manufacturing that the chocolate mass obtained after conching cannot simply be molten and moulded into shape, since this would afford chocolate without gloss and a poor texture not acceptable to consumers. In order to produce high-quality chocolate it proved indispensable to subject the chocolate mass resulting from conching to a so-called tempering treatment. Tempering ensures that almost no modification of the polymorphic cocoa butter other than the most stable one (mostly designated as the β₂-modification) is present before final shaping of the chocolate. Only shaped chocolate such as a chocolate bar that has been subjected to the above tempering treatment has the characteristic "snap" (upon breaking the chocolate bar), does not develop fat rims and has a long shelf life. In addition to this, such tempering treatment results in a contraction of the chocolate so that the shaped chocolate easily comes off from the walls of the mould, resulting in a simplification of the production process. For this reason, the tempering step may be considered essential to the manufacturing of high-quality chocolate.

In principle, the tempering treatment as known in the art comprises a cooling step and a heating step. In the cooling step, crystal seeds having various modifications are formed, and in the heating step the crystal seeds having unfavourable modifications i.e. different from the β₂-modification are re-melted. As a result of the conventional tempering treatment, a flowable chocolate mass is obtained, which is then moulded into a hollow mould, which may be warmed up. After moulding, the moulds filled with chocolate are transported through a cooling tunnel where they are cooled to room temperature by convection in an air stream. The residence time in these tunnels is typically in the order of 20 minutes. The cooling is followed by a de-moulding and wrapping of tablets.

Despite the good appearance of the produced chocolate, in particular their attractive glossy surface, the requirements for cooling tunnels consuming lots of time and space are disadvantageous in the conventional process.

Hence, a quicker and simpler process for the production of high-quality chocolate was strongly demanded.

One approach in this direction is disclosed in GB 2 186 476. This patent application pertains to a method of tempering edible compositions such as chocolate. In this method, liquid chocolate in a completely de-tempered (i.e. non-tempered) state is pumped to a first heat exchanger where the temperature is reduced to 34°C ± 1 °C and afterwards to a second heat exchanger having a temperature of about 25°C. During the tempering treatment, the viscosity of the chocolate mass is controlled by means of online viscometers. In this way it is possible to prepare chocolate in a form having a clay-like consistency and suitable for extrusion.

Moreover, the described process is quick and simple. However, the chocolate produced this way has a poor surface appearance especially a low gloss and as such does not meet the quality standards.

Another method remote from the traditional process is described in GB 2 306 289 A and EP 0 776 608 A. These patent applications disclose a process wherein fat-containing confectionary material such as chocolate is extruded under the influence of pressure and formed by passing the extruded product between the nip of a pair of counter-rotating rollers provided with corresponding circumferential depressions. The resulting chocolate products are said to have an attractive smooth surface. In this process however, buttons of finished chocolate are used as a starting material. That means, the above-described extrusion and forming provides a further step that has to be added to the conventional chocolate production method. Consequently, the process described in the above patent applications is by no means a quicker and simpler alternative to the conventional processes.

A method for press-forming of chocolate shells directly from tempered chocolate is known from EP-A-0920810.

Accordingly, it is the object of the present invention to provide a process for producing chocolate which is quicker and simpler than the known processes and which furthermore affords high quality chocolate having an attractive surface.

This object is solved by the manufacturing process according to the present invention, wherein liquid chocolate mass is subjected to tempering, super-cooling and press-forming. According to other aspects, the present invention is directed to the use of compression moulding means and stamps for forming chocolate.

The starting material for the process according to the present invention is liquid chocolate mass of a conventional composition. That is to say, all types of conventional chocolate can be used, including white chocolate, milk chocolate or dark chocolate.

A typical white chocolate for example comprises 40 to 55 wt.-% sugar, 20 to 40 wt.-% whole milk powder and 20 to 30 wt.-% cocoa butter.

A typical milk chocolate comprises 40 to 55 wt.-%, 20 to 35 wt.-% whole milk powder, 10 to 25 wt.-% cocoa butter and 6 to 25 wt.-% cocoa mass.

A typical dark chocolate comprises 45 to 60 wt.-%, 0 to 15 wt.-% cocoa butter and 26 to 50 wt.-% cocoa mass.

The liquid chocolate mass is usually produced as follows: A conched chocolate mass of the above composition is heated upon stirring to give a clear melt. In principle, there are no limitations as to the temperature to be applied as long as a clear melt is obtained. However, for saving of energy, temperatures of 40 to 50°C are usually selected.

For tempering, any tempering treatment may be applied in the instant process. However, the tempering preferably comprises a cooling and a heating step.

In the cooling step according to the invention, the liquid chocolate mass is preferably cooled to and kept at a temperature of from 20 to 31°C. The temperature to be selected is strongly dependent on the type and composition of chocolate which is subjected to the tempering treatment. Thus, typical cooling temperatures of milk chocolate range from 25 to 30°C, preferably 26 to 28°C, whereas those of dark chocolate are in the range of 26 to 31°C, preferably 27 to 29°C, and those of white chocolate are in the range of 22 to 28°C, preferably 24 to 26°C. It is speculated that the content of milk fat has some influence on the appropriate temperature.

The cooling step, whose main purpose is to form crystals of cocoa butter in the chocolate mass, may be performed in any tempering device, however, devices for continuous operation are preferred. Typical residence times in these devices are 30 s to 1 min. In order to prevent the cocoa butter crystals from growing too large, the mass is subjected to shearing forces. The respective movement of the mass also helps to level temperature differences in the chocolate mass.

Prior to the present invention, there was a general understanding in the art that a degree of crystallization of about 0.5 to 1 % should not be exceeded during the cooling step since otherwise the tempered chocolate mass (i.e. after the reheating step described below) may later not have a sufficient flowability for the moulding step subsequent to tempering. As will be explained below, this value of about 0.5 to 1 % may be exceeded in the process according to the invention.

According to the present invention, the so-called "tempering grade" is used for measuring the degree of crystallization, since this is the usual measure used in the art of chocolate manufacturing. More precisely, "tempering grade" as used herein is a measure for the number, size and distribution of fatty crystals present within the chocolate mass.

In order to determine the tempering grade, the cooling rate curve of a pre-crystallized chocolate mass is monitored. That is, the temperature of the chocolate mass sample is plotted as a function of time whereby a constant amount of heat is removed from the system. The tempering grade is then established on the basis of the resulting graph. Commercial tempermeters, i.e. devices for the measurement of the tempering grade employing the above principle, classify the measurement value as obtained in a tempering grade scale ranging from 1 to 9. The higher the number, the larger the number and size of fatty crystals within the chocolate mass. Since this increase in number and size is normally accompanied by a viscosity increase, online viscosity measurements have occasionally been utilized for controlling the crystallization (cf. GB 2 186 476) and thus for the determination of the tempering grade. However, in the process of the present invention, the determination of tempering grades by means of a tempermeter is preferred.

The present inventors have found that the temperature is not an appropriate parameter for controlling the crystallization, once a particular type of chocolate has been selected, since the crystallization is usually carried out under isothermal conditions which commonly require cooling. That is, under isothermal conditions, crystallization heat is removed by external cooling of the chocolate mass. Therefore it is primarily the degree of cooling which is decisive for accomplishing crystallization control. In the process according to the invention, the degree of cooling in the tempering step is preferably such that the tempering grade of the chocolate mass is about 5, which is a similar tempering grade as desired in the conventional process. However, according to the present invention, the tempering grade may also be higher, such as > 5 and even ≥ 7. There is in fact no upper limit to the tempering grade achieved in this step as long as a sufficient pumpability or transportability for example by means of suitable pumps or screw conveyors is ensured. Too high a tempering, though no principle bar, is not advantageous in this step, since undesired crystal modifications are also formed which need to be re-melted in the following step (see below). It must be noted that a chocolate mass having a tempering grade much higher than 5 would have been discarded in the conventional process.

In the heating step of the tempering treatment in accordance with the invention, the chocolate mass is reheated again. This was found necessary since during the cooling step as described above, not only crystals having the desired β₂-modification, but also more instable crystal modifications are formed. Since those modifications impart detrimental properties to the final chocolate product, as indicated above, there is a need to re-melt those undesired crystal modifications such that possibly all remaining crystal seeds are in the β₂-modification. In practice, the chocolate mass obtained in the above cooling step is preferably heated to a temperature ranging from 25 to 34°C. More preferably, the temperature reached in the heating step is 2 to 5°C above the temperature of the cooling step. Again, the suitable temperature depends on the type of chocolate used. Thus, appropriate temperatures of the heating step are in the range of 26 to 30°C, preferably 27 to 29°C, for white chocolate, in the range of 27 to 33°C, preferably 29 to 31°C, for milk chocolate, and in the range of 30 to 34°C, preferably 31 to 33°C, for dark chocolate.

The heating step may be carried out in the same tempering device as used in the previous cooling step which preferably is a device for continuous operation. Also, the cooling may be conducted in a downstream portion of such a continuous tempering device. However it can also be conducted in a separate device. Typical residence times in these devices are 30 s to 1 min. As concerns the heating medium employed, its temperature may be properly selected depending on the tempering grade that has been attained in the previous cooling step, since the number of crystals of undesired modifications, that need to be re-melted in the present step, likewise increases with tempering grade.

Upon completion of tempering, preferably only crystal seeds in β₂-modification are present in the chocolate mass.

Whereas in the prior art process, the tempering is directly followed by a moulding step, the instant process uses a super-cooling step instead. This super-cooling step is carried out in the present invention for providing the chocolate mass with the rheological properties required for the press-forming step. That is, the super-cooling step preferably results in a tough and/or glutinous, more preferably non-liquid chocolate mass.

During super-cooling, the fatty crystal seeds as formed during the tempering step, grow and agglomerate to form larger clusters and, presumably, a network structure. This process is accompanied by a further viscosity increase that is reflected by a larger tempering grade. However, in contrast to conventional moulding processes, higher viscosities may be attained in this stage of the process of the present invention. Specifically, the chocolate mass leaving the super-cooling stage is subjected to press-forming, whereas moulding of chocolate mass usually requires a low viscosity of the chocolate mass to accomplish flowability. In addition, the agglomeration of fatty crystals is beneficial as regards the "snap" property of the shaped chocolate product upon breaking.

The tempering grade obtained in the super-cooling step is not particularly limited, and the viscous chocolate mass may have a tempering grade of ≥ 5. As indicated above, the crystallization is conventionally carried out under isothermal conditions, and the amount of energy removed from the system through cooling is a means for controlling the crystallization. Thus, in the super-cooling step of the present invention, a part or preferably all of the remainder of the fatty phase is crystallized. Too strong (fast) a cooling may result in a wrong crystal modification, i.e. a modification other than the β₂-modification, which may subsequently afford a brittle chocolate product that would not meet the quality standards of the market. Hence the intensity of cooling should be adjusted properly in order to obtain a viscous material, comparable to a noodle dough, which can be pressed through an orifice and be shaped by appropriate means.

In the super-cooling step, similar to the above cooling step in tempering, a shear force is imposed on the chocolate mass. This prevents the crystals from growing too large, thus avoiding too high a viscosity of the chocolate mass which may render the same unsuitable even for press-forming. In addition, applying a shearing force is suitable for blending and mixing the chocolate mass, thus securing an appropriate heat transfer throughout the mass.

The super-cooling is effected in any device capable of removing heat from and applying a shearing force on the chocolate mass. For example, an extruder having a heat exchange jacket or a surface scraped heat exchanger may be used. Thus, it may be possible to employ the same tempering device as used in the previous tempering stage, possibly in a downstream portion of said device in case of continuous operation. In one embodiment, the tempered chocolate mass is delivered by means of a pump to a surface scraped heat exchanger. Any conventional type may be used for this purpose, in particular a rotary piston pump, an eccentric screw pump, and a diaphragm pump such as a hose diaphragm pump.

The super-cooling may be conducted by use of cooling media having a temperature of from -15 to 5°C. There are no limitations with respect to suitable cooling media, and all compounds known in the field of cooling may be employed.

Pumps of these types may generally be used in the process of the instant invention whenever chocolate mass needs to be conveyed to another device. Screw conveyors may likewise be utilized. However, it should be understood, that the conveying means which may be used in this process are by no means limited thereto.

The chocolate mass thus obtained leaves the device for super-cooling through an outlet, such as an orifice. In one embodiment of the invention, the super-cooling step is carried out in an extruder which may be a screw-type or a piston-type extruder. In this case, the chocolate mass is pressed through the extrusion dye, subsequent to the super-cooling step.

When leaving the apparatus after the super-cooling, the surface appearance of the viscous chocolate mass is very mat and dull, and as such generally not sufficient to find consumer acceptance. In the course of their studies, the present inventors found that press-forming the chocolate removes this drawback. Generally, any suitable compression moulding means may be used for the press-forming according to the invention. However, it is preferred to use stamps, especially cooled stamps. The stamps may be made of high-alloy steel such as chromium, nickel and molybdenum steel. Besides, compression moulding means such as described in DE 197 48 370 A for soap forming, carrying a plastic insert, may likewise be employed. Compression moulding means of this kind may form part of suitable mechanical and hydraulic presses.

Though the shape of moulds for use in the compression moulding means is not particularly limited, their shape may be selected as needed for forming chocolate bars and pieces, as well as other shapes.

## Claims

1. A process for producing chocolate comprising the following steps:
a) liquid chocolate mass is subjected to tempering,
b) the tempered chocolate mass is subjected to super-cooling to yield super-cooled viscous chocolate mass, and
c) the super-cooled viscous chocolate mass is subjected to press-forming.

2. The process according to Claim 1, wherein the tempering comprises a first cooling step, wherein the chocolate mass is cooled to and kept at a temperature of 20 to 31°C, and a subsequent heating step, wherein the chocolate mass is heated to and kept at a temperature of 25 to 34°C.

3. The process according to Claim 2, wherein the cooling step is effected such that a chocolate mass having a tempering grade of ≥ 5 is obtained.

4. The process according to Claim 3, wherein the cooling is effected such that a chocolate mass having a tempering grade of ≥ 7 is obtained.

5. The process according to any one of the preceding claims, wherein the super-cooling step comprises cooling and applying a shearing force on the chocolate mass.

6. The process according to Claim 5, wherein the cooling is isothermal cooling.

7. The process according to any one of the preceding claims, wherein the press-forming is effected with a compression moulding means.

8. The process according to Claim 7, wherein the compression moulding means are stamps.

## Patentansprüche

1. Verfahren zur Herstellung von Schokolade, das die folgenden Schritte umfasst:
(a) flüssige Schokoladenmasse wird temperiert,
(b) die temperierte Schokoladenmasse wird unterkühlt und so unterkühlte, viskose Schokoladenmasse erhalten, und
(c) die unterkühlte, viskose Schokoladenmasse wird formgepresst.

2. Verfahren gemäss Anspruch 1, wobei das Temperieren einen ersten Kühlungsschritt, in dem die Schokoladenmasse auf eine Temperatur von 20 bis 31°C gekühlt und dabei gehalten wird, und einen anschliessenden Erwärmungsschritt, in dem die Schokoladenmasse auf eine Temperatur von 25 bis 34°C erwärmt und dabei gehalten wird, umfasst.

3. Verfahren gemäss Anspruch 2, wobei der Kühlungsschritt so durchgeführt wird, dass eine Schokoladenmasse mit einem Temperierungsgrad von ≥ 5 erhalten wird.

4. Verfahren gemäss Anspruch 3, wobei das Kühlen so durchgeführt wird, dass eine Schokoladenmasse mit einem Temperierungsgrad von ≥ 7 erhalten wird.

5. Verfahren gemäss einem der vorstehenden Ansprüche, wobei der Unterkühlungsschritt die Kühlung und die Anwendung einer Scherkraft auf die Schokoladenmasse umfasst.

6. Verfahren gemäss Anspruch 5, wobei das Kühlen isothermes Kühlen ist.

7. Verfahren gemäss einem der vorstehenden Ansprüche, wobei das Formpressen mit Presswerkzeugen durchgeführt wird.

8. Verfahren gemäss Anspruch 7, wobei die Presswerkzeuge Stempel sind.

## Revendications

1. Procédé pour la production de chocolat comprenant les étapes suivantes dans lesquelles :
a) une masse de chocolat liquide est soumise à un revenu,
b) la masse de chocolat revenue est soumise à un sur-refroidissement pour donner une masse de chocolat visqueuse sur-refroidie, et
c) la masse de chocolat visqueuse sur-refroidie est soumise à un formage à la presse.

2. Procédé selon la revendication 1, dans lequel le revenu comprend une première étape de refroidissement, dans laquelle la masse de chocolat est refroidie et maintenue à une température de 20 à 31°C, et une étape suivante de chauffage dans laquelle la masse de chocolat est chauffée et maintenue à une température de 25 à 34°C.

3. Procédé selon la revendication 2, dans lequel l'étape de refroidissement est effectuée de façon qu'une masse de chocolat ayant une qualité de revenu de ≥ 5 soit obtenue.

4. Procédé selon la revendication 3, dans lequel le refroidissement est effectué de façon qu'une masse de chocolat ayant une qualité de revenu de ≥ 7 soit obtenue.

5. Procédé selon l'une quelconque des revendications précédentes, dans lequel l'étape de sur-refroidissement comprend un refroidissement et l'application d'une force de cisaillement à la masse de chocolat.

6. Procédé selon la revendication 5, dans lequel le refroidissement est un refroidissement isotherme.

7. Procédé selon l'une quelconque des revendications précédentes, dans lequel le formage à la presse est effectué à l'aide d'un moyen de moulage par compression.

8. Procédé selon la revendication 7, dans lequel le moyen de moulage par compression comprend des étampes.
